# EUROPEAN PATENT SPECIFICATION

(11) **EP 2 298 700 B1**
(45) Date of publication and mention of the grant of the patent: **23.10.2013**
(21) Application number: 09773257.2
(22) Date of filing: 03.06.2009
(51) Int. Cl.: C01B 31/06, C01B 9/08, C09K 3/14

(54) **FLUORINATED NANO DIAMOND AND DISPERSION THEREOF, AND PROCESS FOR PRODUCTION OF THE SAME**
FLUORIERTER NANODIAMANT UND DISPERSION DARAUS SOWIE HERSTELLUNGSVERFAHREN DAFÜR
NANO-DIAMANT FLUORÉ ET DISPERSION DE CELUI-CI, ET PROCÉDÉ POUR LA PRODUIRE

(30) Priority: 30.06.2008 JP 2008170823
(43) Date of publication of application: 23.03.2011
(73) Proprietor: CENTRAL GLASS COMPANY, LIMITED, Ube-shi, Yamaguchi 755-0001 (JP)
(72) Inventor: YAO, Akifumi, Ube-Shi, Yamaguchi 755-0001 (JP)
(74) Representative: Manitz, Finsterwald & Partner GbR
(86) International application number: PCT/JP2009/060119
(87) International publication number: WO 2010/001679

(56) References cited:
- WO-A1-2007/142213
- WO-A1-2007/142213
- JP-A- 2007 308 351
- US-A- 5 674 621
- US-A1- 2005 158 549
- ALTUN A O ET AL: "Fabrication of fluorine-doped diamond-like carbon stamps for UV nanoimprint lithography", NANOTECHNOLOGY, IOP, BRISTOL, GB, vol. 17, no. 18, 28 September 2006 (2006-09-28), pages 4659-4663, XP020104089, ISSN: 0957-4484, DOI: DOI:10.1088/0957-4484/17/18/022
- KONDO ET AL: "Characterization and electrochemical properties of CF4 plasma-treated boron-doped diamond surfaces", DIAMOND AND RELATED MATERIALS, ELSEVIER SCIENCE PUBLISHERS, AMSTERDAM, NL, vol. 17, no. 1, 23 October 2007 (2007-10-23), pages 48-54, XP022382300, ISSN: 0925-9635, DOI: DOI:10.1016/J.DIAMOND.2007.10.009

## Description

### Technical Field

The present invention relates to a fluorinated nanodiamond and a dispersion thereof useful as precision abrasives, lubricants, heat-exchange fluid mediums or the like, and a process for producing the dispersion of the fluorinated nanodiamond.

### Background Art

Diamond particles, produced by an explosive-bombardment method (impact method) in which an impact pressure is applied with the use of an oxygen-deficient explosive material such as trinitrotoluene (TNT) or hexogen (RDX), have a very small primary particle size of 4 to 5 nm and thus are called nanodiamond (ND) particles. Because of their nano-scale particle size, the ND particles are expected to be useful in a wide range of applications such as abrasives, lubricants, heat-exchange fluid mediums, composite materials with resins and/or metals, electronic materials e.g. low dielectric films, emitter materials etc. and medical fields e.g. DNA carriers, virus-capturing carriers etc. in addition to the general applications for diamond materials. In the case of industrial use of the ND particles for the above application purposes, the ND particles needs to be provided with a fine particle size of less than 100 nm in the form of a dispersion in a liquid medium. However, an impurity carbon layer such as a non-graphitic or graphitic film is welded onto surfaces of the ND particles so that the ND particles are produced as secondary and/or tertiary agglomerates of 50 to 7500 nm in size, which are also called cluster diamond (CD) particles. It is accordingly necessary to remove the impurity carbon layer and to disintegrate the particle agglomerates. Further, in the case of handling of the nano-order particles dispersed in the liquid medium, it is more likely that the particles will be agglomerated and settled as the size of the particles decreases and thus is very difficult to obtain the stable dispersion of the particles.

As solutions to these problems, there have been examined various techniques for keeping primary ND particles stably dispersed in a liquid medium by a beads-mill wet pulverizer or an ultrasonic homogenizer. (See Patent Documents 1 and 2.)

There has also been reported a technique for disintegrating secondary and tertiary ND particle agglomerates (CD particles) by reaction of the CD particles with a fluorine gas. For example, when CD particles are brought into contact with a fluorine gas under the conditions of a reaction temperature of 300 to 500°C, a fluorine gas pressure of 0.1 MPa and a reaction time of 5 to 10 days, the resulting fluorinated CD particles show a F/C molar ratio of about 0.2 (as determined by XPS and elemental analysis) and maintains a diamond structure. (See Non-Patent Document 3.) It has been confirmed from the TEM observation that the CD particles of about 40 µm in secondary particle size could be partially disintegrated by the above fluorination treatment to a size of the order of 200 µm. It has also been confirmed from the result of the rotary-type friction test on a mixed powder of the CD particles with polytetrafluoroethylene (PTFE) that the friction coefficient of the CD particles becomes significantly decreased under the above fluorination treatment. (See Non-Patent Document 4.) This is because, according to one report, the high-temperature fluorination reaction causes removal of non-graphitic carbon from the surfaces of the ND particles and reduction of surface energy through the formation of a CF group, CF₂ group and/or CF₃ group on the surfaces of the ND particles as is evident from the presence of a clear lattice pattern of the ND particles in the TEM observation. (See Non-Patent Document 5.) It has further been reported that, when ND particles are subjected to fluorination treatment under the conditions of a reaction temperature of 150, 310, 410 or 470°C, a F₂/H₂ flow rate ratio of 3:1 and a reaction time of 48 hours, the resulting fluorinated ND particles have a fluorine content of 5 to 8.6 at.% (as determined by EDX analysis) and exhibit improved solubility (dispersibility) in a polar solvent e.g. ethanol as compared to that of the starting unfluorinated ND particles. (See Patent Document 3 and Non-Patent Document 6.)

WO 2007/142213 A1 relates to a method for preparing a dispersion of fluorinated nanodiamond particles comprising the steps of i) preparing a suspension by blending fluorinated nanodiamond particles with a first liquid, such as ethanol, ii) classifying the suspension to give a classified suspension and iii) blending the classified suspension with a second liquid, such a hydrocarbon, an alcohol, glycerin or the like.

### Prior Art Documents

### Patent Document

Patent Document 1: Japanese Laid-Open Patent Publication No. 2005-001983
Patent Document 2: Japanese Laid-Open Patent Publication No. 2005-097375
Patent Document 3: U.S. Patent Application Publication No. 2005/0158549A1

### Non-Patent Document

Non-Patent Document 1: OSAWA Eiji, Bulletin of the Abrasive
Grain-Procession Society of Japan, 47: 414 (2003)
Non-Patent Document 2: "Nanocarbon Handbook" published by NTS Inc., P.716-726
Non-Patent Document 3: OI Tatsumi, YONEMOTO Akiko, KAWASAKI Shinji, OKINO Fujio, HIGASHIBARA Hidekazu, The Collected Main Purports of the 26th Meeting on Fluorine Chemistry (November, 2002), P.24-25
Non-Patent Document 4: YONEMOTO Akiko, OI Tatsumi, KAWASAKI Shinji, OKINO Fujio, KATAOKA Fumiaki, OSAWA Eiji, HIGASHIBARA Hidekazu, The Collected Resumes of the 83th Annual Spring Meeting of the Chemical Society of Japan (March, 2003). P.101
Non-Patent Document 5: H. Touhara, K. Komatsu, T. Ohi, A. Yonemoto, S. Kawasaki, F. Okino and H. Kataura, Third French-Japanese Seminar on Fluorine in Inorganic Chemistry and Electrochemistry (April, 2003)
Non-Patent Document 6: Y. Liu, Z. Gu, J. L. Margrave, and V. Khabashesku; Chem. Mater. 16, 3924 (2004)

### Disclosure of the Invention

### Problems to be Solved by the Invention

As discussed in the above section "Background Art", it has been reported that the dispersibility of the fluorinated ND particles in the polar solvent can be improved as compared to that of the starting unfluorinated ND particles. The present inventor has however revealed that, in the case of producing the fluorinated ND particles under the conditions of Patent Document 3 and Non-Patent Document 6, the fluorinated ND particles produced at a reaction temperature of 410°C or higher can be mixed and stirred, but hardly dispersed, in an alcohol, i.e., become lower in dispersibility than that of the starting unfluorinated ND particles in contrast to these reports. The present inventor has also revealed that, even in the case of producing the fluorinated ND particles by the fluorination technique of Non-Patent Document 3, the fluorinated ND particles produced at a reaction temperature of 400°C or higher can be mixed and stirred, but get precipitated without forming a dispersion, in an alcohol, i.e., become lower in dispersibility than that of the starting unfluorinated ND particles. On the other hand, the fluorinated ND particles produced at a fluorination temperature of less than 200°C can be dispersed in an alcohol e.g. ethanol, but in the form of agglomerates, so that the resulting dispersion shows a very large average particle size of a few hundred nanometers or more and does not take advantage of the nano-scale material characteristics of the fluorinated ND particles.

In view of the foregoing, it is an object of the present invention to provide a fluorinated ND capable of being stably dispersed in a dispersion medium without causing a precipitation for a long time of at least 120 hours even in the case of using an alcohol e.g. ethanol as the dispersion medium and without increasing its average particle size to be greater than 20 nm. It is also an object of the present invention to provide a dispersion of such a fluorinated ND.

### Means for Solving the Problems

As a result of extensive researches, the present inventor has found that the dispersibility of fluorinated ND particles in an alcohol e.g. ethanol can be improved, as compared to that of conventional fluorinated ND particles, by controlling the element ratio of fluorine and oxygen bonded to surfaces of the fluorinated ND particles to within a predetermined range whereby it is possible to provide a dispersion of the fluorinated ND particles that is stable for a long time of at least 120 hours without increasing the average particle size of the fluorinated ND particles and is also possible to adjust the dispersion concentration of the fluorinated ND particles freely within the range of 0.01 to 15 mass%. The present invention is based on this finding.

Namely, there is provided according to the present invention a fluorinated nanodiamond for production of a fluorinated nanodiamond dispersion by being dispersed in an alcohol-containing dispersion medium, wherein the fluorinated nanodiamond has an oxygen-to-fluorine element ratio (O/F) of 0.06 to 0.20.

There is also provided according to the present invention a fluorinated nanodiamond dispersion in which the fluorinated nanodiamond is dispersed in an alcohol-containing dispersion medium.

There is further provided according to the present invention a process for producing a fluorinated nanodiamond dispersion, wherein the fluorinated nanodiamond dispersion comprises a dispersion medium containing an alcohol and the aforementioned fluorinated nanodiamond, wherein the process comprises:
- a fluorination step for forming a fluorinated nanodiamond by reaction of nanodiamond particles with a fluorination agent;
- an oxidation step for performing oxidation treatment on the fluorinated nanodiamond formed in the fluorination step in such a manner that an oxygen-to-fluorine element ratio of the fluorinated nanodiamond is controlled to 0.06 to 0.20;
- a suspension step for forming a suspension by mixing the fluorinated nanodiamond obtained in the oxidation step in an alcohol-containing dispersion medium; and
- a classification step for classifying the suspension formed in the suspension step.

### Best Modes for Embodying the Invention

Hereinafter, the present invention will be described in detail below.

A fluorinated ND according to the present invention is produced by fluorination reaction of ND particles with a fluorination agent (fluorination step) and is characterized as having an oxygen-to-fluorine element ratio O/F of 0.06 to 0.20.

The fluorination agent can be selected from a fluorine gas, a fluorine gas diluted with nitrogen or hydrogen, nitrogen trifluoride, dinitrogen tetrafluoride, chlorine trifluoride, bromine trifluoride, iodine pentafluoride, carbon tetrafluoride and metal fluorides. The fluorinated ND is formed by direct reaction of the ND particles with the fluorination agent or by reaction of the ND particles with a fluorine plasma generated from the fluorination agent. In general, the fluorination reaction of a diamond material occurs only at outermost surfaces of primary particles of the diamond material so that the resulting fluorinated diamond material has a surface covered with fluorine atoms. A part of the surface of the fluorinated diamond material that is not covered with fluorine atoms is covered with oxygen atoms or oxygen-containing functional groups such as hydroxyl and carboxyl.

In the present invention, the element ratio O/F of the fluorinated ND refers to the integrated intensity ratio of peaks attributed to oxygen and fluorine by X-ray photoelectron spectroscopic analysis. When the fluorinated ND is dispersed in an alcohol, there occurs solvation of the fluorinated ND and the alcohol. If the element ratio O/F of the fluorinated ND is less than 0.06, the solvation of the fluorinated ND does not occur due to decrease in the compatibility between the fluorinated ND and the alcohol. The dispersion of the fluorinated ND cannot be thus obtained. On the other hand, if the element ratio O/F of the fluorinated ND exceeds 0.20, the cohesive force between the fluorinated ND particles becomes increased so that the reagglomeration of the fluorinated ND particles occurs. At worst, it could cause a precipitation. The dispersion of the fluorinated ND cannot be thus kept stable for a long time.

The fluorine content of the fluorinated ND depends on the particle size of the primary ND particles and cannot be generally specified. In the case where the fluorinated ND has a primary particle size of 4 nm and exhibits an octahedral single crystal structure, the maximum fluorine content of the fluorinated ND is estimated as about 30 mass% based on the total mass of the diamond particles. The maximum fluorine content of the fluorinated ND is estimated as about 25 mass% based on the total mass of the diamond particles in the case where the fluorinated ND has a primary particle size of 5 nm and exhibits an octahedral single crystal structure. In order to secure the dispersion effect due to the fluorination of the ND particles, it is preferable that: at least about 20% of the surfaces of the ND particles are fluorinated; and the fluorine content of the fluorinated ND is at least 5 mass% or more.

The production conditions of the fluorinated ND cannot be generally specified as the element ratio O/F and fluorine content of the fluorinated ND vary depending on the reaction method and reaction conditions (reaction temperature, reaction time, fluorine gas concentration etc.). For example, when the ND particles are brought into direct reaction with a diluted fluorine gas (5 volume%, dilution gas: argon) under the conditions of a reaction temperature of 400°C and a reaction time of 140 hours, the resulting fluorinated ND attains an element ratio O/F of 0.06 and a fluorine content of 12 mass%. In the direct fluorination reaction of the ND particles with the fluorine gas, the reaction temperature is preferably set to 250°C or higher. If the reaction temperature is lower than 250°C, the element ratio O/F of the fluorinated ND may exceed 0.20. Further, the reaction time is preferably set to 50 hours or more as it has an influence on the purity of the fluorinated ND. The element ratio O/F of the fluorinated ND decreases with increase in reaction temperature and time. It is thus feasible to control the element ratio O/F of the fluorinated ND by performing, after the fluorination, oxidation treatment on the fluorinated ND when the element ratio O/F of the fluorinated ND obtained by the fluorination is less than 0.6 (or less than a given value). As such oxidation treatment, there can be performed heat treatment in an oxygen-containing atmosphere (e.g. dry air), hydrothermal treatment or ultrasonic treatment in an oxidizing agent e.g. hydrogen peroxide. The method of the oxidation treatment is not particularly limited in order to obtain the effects of the present invention. For example, when the fluorinated ND is produced under the above fluorination conditions, the element ratio O/F (in this case, 0.06) of the fluorinated ND can be controlled to 0.15 by performing, as the oxidation treatment, heat treatment under the conditions of a nitrogen/air flow rate ratio of 5/1, a temperature of 400°C and a time of 12 hours.

As the dispersion medium of the fluorinated ND, an alcohol can be used solely or as a main component in combination with any other dispersion medium. The effects of the present invention are not limited by the kind of the alcohol used as the fluorinated ND dispersion medium. In the case of forming and using the dispersion at ordinary temperatures, it is preferable that the alcohol exists as a liquid at such ordinary temperatures and has a viscosity of 4 cP or lower at 20°C. The alcohol is particularly preferable a lower alcohol of 5 or less carbon atoms. Examples of the lower alcohol of 5 or less carbon atoms are methanol, ethanol, isopropyl alcohol, butanol and fluorine-containing alcohols such as tetrafluoropropanol. These alcohol solvents can be used solely or in combination of two or more thereof.

The dispersion of the fluorinated ND can be produced by a mixing operation i.e. mixing the fluorinated ND with the alcohol and irradiating the mixture with ultrasonic waves by an ultrasonic homogenizer. Depending on the fluorination conditions, there is a case where the agglomerates contained in the starting unfluorinated ND may not completely been removed and thus may become a cause of increase in the average particle size of the fluorinated ND. In this case, the dispersion of the fluorinated ND can be produced by mixing the fluorinated ND with the alcohol, irradiating the mixture with ultrasonic waves by an ultrasonic homogenizer and thereby forming a suspension of the fluorinated ND (suspension step), and then, classifying the suspension by centrifugation or the like.

In the mixing operation and in the suspension step, the irradiation output of the ultrasonic waves is preferably set to 400 W or higher. It is conceivable that the fluorinated ND could be dispersed or suspended even if the irradiation output is less than 400 W. There however arises a need to increase the treatment time as the irradiation output decreases. In order to prevent a precipitation of the fluorinated ND, it is necessary to irradiate the ultrasonic waves for 10 hours or more when the irradiation output is 200 W and for 48 hours when the irradiation output is 80 W. When the irradiation output is 400 W or more, the object of the present invention can be achieved adequately by the ultrasonic treatment for 1 hour.

In order to obtain the dispersion of the fluorinated ND with an average particle size of 20 nm by centrifugation in the classification step, it is preferable to subject the suspension to, after the ultrasonic wave irradiation, centrifugal classification at a relative centrifugal acceleration of 3500 to 6000 G. When the relative centrifugal acceleration is less than 3500 G, the agglomerates of the fluorinated ND particles may not completely be removed by the centrifugal classification and thus may become a cause of increase in the average particle size of the fluorinated ND. When the relative centrifugal acceleration exceeds 6000 G, the fluorinated ND particles of 20 nm or smaller in size may be precipitated and removed by the centrifugal classification so as to thereby cause decrease in the dispersion concentration of the fluorinated ND. The centrifugation time varies depending on the relative centrifugal acceleration, the capacity of the centrifugation tube used and the like and thus cannot be specified. In the case of using a 50-ml centrifugation tube, for example, it suffices to perform the centrifugal classification at a relative centrifugal acceleration of 4500 G for 0.5 hour and at a relative centrifugal acceleration of 6000 G for 0.1 hour.

The present invention will be described in more detail below by way of the following examples. It should be noted that these examples are illustrative and are not intended to limit the present invention thereto.

Fluorinated ND dispersions (Examples 1-5 and Comparative Examples 1-2) were produced and evaluated for their performance by the following procedures.

### [Fluorination]

ND particles (purified nanodiamond powder of 3 to 20 nm in particle size, manufactured by Limited Responsibility Company: Kanshuku Ryoun-Nomai Materials; Sales Agent: New Metals and Chemicals Corporation) were heated at 400°C for 3 hours under a pressure of 1 kPa, thereby removing moisture from the ND particles. Into a nickel reaction tube, 20 g of the dried ND particles was put. Then, a fluorine gas and an argon gas were passed through the reaction tube at 20°C and at respective flow rates of 20 mL/min and 380 mL/min. The sample was subsequently heated to a target temperature and kept subjected to the flow of the fluorine and argon gases for a predetermined time. With this, a fluorinated ND was produced by reaction of the ND particles with the fluorine gas. Herein, the element ratio O/F of the resulting fluorinated ND was determined by analyzing the sample with an X-ray photoelectron spectrometer (JPS-9010, manufactured by JEOL Ltd., X-ray source: MgKα, acceleration voltage: 10 kV, emission current: 10 mA) and calculating the integrated intensity ratio of an oxygen peak (527 to 543 eV) and a fluorine peak (677 to 695 eV) in the observed spectrum. The fluorine content of the fluorinated ND was determined by elemental analysis. The fluorination conditions and the element ratio O/F and fluorine content of the fluorinated ND are indicated in TABLE 1.

### [Heat Treatment]

Each of the samples of Examples 2, 3 and 5 was heat treated in a high-temperature electric furnace (ETR-11K, manufactured by ISUZU Seisakusho Co., Ltd.). The heat treatment was herein performed under the conditions of a treatment temperature of 400°C (Examples 2-3) or 450°C (Example 5) and a treatment time of 12 hours by flowing a nitrogen gas and air at respective flow rates of 3 L/min and 0.6 L/min. The element ratio O/F and fluorine content of the fluorinated ND material after the heat treatment are also indicated in TABLE 1.

**[TABLE 1]**

| Example | Fluorination conditions | | After fluorination | | After heat treatment | |
|---|---|---|---|---|---|---|
| | Reaction temperature (°C) | Reaction time (hr) | O/F | Fluorine content (mass%) | O/F | Fluorine content (mass%) |
| Example 1 | 400 | 140 | 0.06 | 12 | No heat treatment | |
| Example 2 | 400 | 140 | 0.06 | 12 | 0.15 | 11 |
| Example 3 | 400 | 60 | 0.08 | 12 | 0.17 | 10 |
| Example 4 | 250 | 100 | 0.19 | 10 | No heat treatment | |
| Example 5 | 450 | 100 | 0 | 14 | 0.12 | 12 |
| Comparative Example 1 | 200 | 3 | 0.38 | 7 | No heat treatment | |
| Comparative Example 2 | 420 | 140 | 0.02 | 13 | No heat treatment | |

### [Production of Dispersion]

To 300 ml of ethanol, 2.4 g of each of the fluorinated samples (Examples 1-4 and Comparative Examples 1-2) and the fluorinated and heat-treated samples (Examples 2, 3 and 5) was added. The resulting mixture was irradiated with ultrasonic waves by an ultrasonic homogenizer (VCX-750, manufactured by Sonics & Materials Inc.) at an output of 700 W, thereby forming a suspension of the fluorinated ND. The thus-obtained suspension was left still for 48 hours and then subjected to classification by a centrifuge (CN-2060, manufactured by HSIANGTAI Co., Ltd.) at a rotation speed of 4000 rpm for 20 minutes. After the centrifugation, the supernatant was extracted as the dispersion.

### [Performance Evaluations]

The above-produced dispersion was left still for 120 hours and then measured for its particle size distribution and concentration. The measurement results of the average particle size and dispersion particle concentration of the dispersion are indicated in TABLE 2. The average particle size was herein determined from a mass-converted particle size distribution of the sample, in which the frequency of each particle size was converted by the mass of the dispersion particles, as measured with a particle size distribution measurement device (FPAR1000, manufactured by OTSUKA Electronics Company) based on a dynamic light scattering technique. The dispersion particle concentration was determined by sampling 10 g of the dispersion, drying the sample at 50°C with a drier and thereby removing the dispersion medium, and then, weighing the mass of the residual particles.

**[TABLE 2]**

| Example | Dispersion particle concentration (mass%) | Average particle size (nm) |
|---|---|---|
| Example 1 | 0.1 | 10 |
| Example 2 | 0.4 | 16 |
| Example 3 | 0.2 | 19 |
| Example 4 | 0.1 | 18 |
| Example 5 | 0.5 | 12 |
| Comparative Example 1 | 0.05 | 285 |
| Comparative Example 2 | (*1) | (*2) |

| | | |
|---|---|---|
| (*1) Uncalculatable due to the fact that the mass of the residual particles was 0.01 mg or less. (*2) Unmeasurable due to the low particle concentration of the dispersion. | | |

As shown in TABLES 1 and 2, in Examples 1-5, the element ratio O/F of the fluorinated ND was not smaller than 0.06 and not greater than 0.20; and the average particle size of the fluorinated ND in the dispersion was smaller than or equal to 20 nm and the content of the fluorinated ND in the dispersion was in the range of 0.01 to 15 mass% even after the dispersion was left still for 120 hours. It can be thus concluded that the fluorinated ND of each of Examples 1-5 was stably dispersed in ethanol at a dispersion concentration of 0.01 to 15 mass% without its nano-scale material characteristics being impaired by the increase in the average particle size of the fluorinated ND. In Comparative Example 1, by contrast, the fluorinated ND had a large element ratio O/F of 0.38; and, due to the occurrence of agglomeration of the fluorinated ND particles, the average particle size and content of the fluorinated ND in the dispersant became 285 nm and 0.05 mass%, respectively, after the dispersion was left still for 120 hours. In Comparative Example 2, the fluorinated ND had a small element ratio O/F of 0.02 and did not get dispersed in ethanol; and both of the average particle size and content of the fluorinated ND in the dispersant were undetectable after the dispersion was left still for 120 hours.

As described above, it is possible according to the present invention not only to produce and store the dispersion in which the fluorinated ND is kept stably dispersed in the alcohol-containing dispersion medium for a long time of at least 120 hours, but also to adjust the content of the fluorinated ND in the dispersion freely within the range of 0.01 to 15 mass%, by controlling the element ratio O/F of the fluorinated ND to 0.06 to 0.20.

The present invention has been described above with reference to, but is not limited to the above specific embodiments. Various modifications and variations of the embodiments described above will occur to those skilled in the art without departing from the scope of the present invention.

## Claims

1. A fluorinated nanodiamond for production of a fluorinated nanodiamond dispersion by being dispersed in an alcohol-containing dispersion medium, wherein the fluorinated nanodiamond has an oxygen-to-fluorine element ratio (O/F) of 0.06 to 0.20.

2. A process for producing a fluorinated nanodiamond dispersion, wherein the fluorinated nanodiamond dispersion comprises a dispersion medium containing an alcohol and the fluorinated nanodiamond according to claim 1, wherein the process comprises:
a fluorination step for forming a fluorinated nanodiamond by reaction of nanodiamond particles with a fluorination agent;
an oxidation step for performing oxidation treatment on the fluorinated nanodiamond formed in the fluorination step in such a manner that an oxygen-to-fluorine element ratio of the fluorinated nanodiamond is controlled to 0.06 to 0.20;
a suspension step for forming a suspension by mixing the fluorinated nanodiamond obtained in the oxidation step in an alcohol-containing dispersion medium; and
a classification step for classifying the suspension formed in the suspension step.

3. The process according to claim 2, wherein the alcohol is used solely as the dispersion medium.

4. The process according to claim 2 or 3, wherein the alcohol is a lower alcohol and/or fluorinated alcohol of 5 or less carbon atoms that exists as a liquid at ordinary temperatures and has a viscosity of 4 cP or lower at 20°C.

5. The process according to any of claims 2 to 4, wherein the oxidation treatment is either heat treatment in an oxygen-containing atmosphere, hydrothermal treatment, or ultrasonic treatment in an oxidizing agent.

## Patentansprüche

1. Fluorierter Nanodiamant zur Herstellung einer Dispersion aus fluoriertem Nanodiamant durch Dispergieren von diesem in einem Alkohol enthaltenden Dispersionsmedium, wobei der fluorierte Nanodiamant ein Verhältnis von Sauerstoffzu-Fluorelement (O/F) von 0,06 bis 0,20 aufweist.

2. Verfahren zum Herstellen einer Dispersion aus fluoriertem Nanodiamant, wobei die fluorierte Nanodiamant-Dispersion ein einen Alkohol enthaltendes Dispersionsmedium und einen fluorierten Nanodiamanten nach Anspruch 1 enthält, wobei das Verfahren umfasst:
einen Fluorierungsschritt zum Ausbilden eines fluorierten Nanodiamanten durch Reaktion von Nanodiamantpartikeln mit einem Fluorierungsmittel,
einen Oxidationsschritt zum Durchführen der Oxidationsbehandlung des fluorierten Nanodiamanten, welcher in dem Fluorierungsschritt gebildet worden ist, in einer solchen Weise, dass ein Sauerstoff-zu-Fluorelement-Verhältnis des fluorierten Nanodiamanten auf 0,06 bis 0,20 eingestellt wird,
einen Suspensionsschritt zum Ausbilden einer Suspension durch Vermischen des in dem Oxidationsschritt erhaltenen fluorierten Nanodiamanten in einem Alkohol enthaltenden Dispersionsmedium und
einen Klassifizierungsschritt zum Klassifizieren der Suspension, welche in dem Suspensionsschritt gebildet worden ist.

3. Verfahren nach Anspruch 2, wobei als Dispersionsmedium lediglich der Alkohol eingesetzt wird.

4. Verfahren nach Anspruch 2 oder 3, wobei der Alkohol ein niederer Alkohol und/oder fluorierter Alkohol mit 5 oder weniger Kohlenstoffatomen ist, welcher bei herkömmlichen Temperaturen als eine Flüssigkeit vorliegt und bei 20°C eine Viskosität von 4 cP oder weniger aufweist.

5. Verfahren nach einem der Ansprüche 2 bis 4, wobei die Oxidationsbehandlung entweder eine Wärmebehandlung in einer Sauerstoff enthaltenden Atmosphäre, eine hydrothermale Behandlung oder eine Ultraschallbehandlung in einem Oxidationsmittel ist.

## Revendications

1. Nanodiamant fluoré pour la production d'une dispersion de nanodiamants fluorés par dispersion dans un milieu de dispersion contenant un alcool, ledit nanodiamant fluoré ayant un rapport des éléments oxygène-au-fluor (O/F) de 0,06 à 0,20.

2. Procédé pour produire une dispersion de nanodiamants fluorés, dans lequel la dispersion de nanodiamants fluorés comprend un milieu de dispersion contenant un alcool et le nanodiamant fluoré suivant la revendication 1, le procédé comprenant :
une étape de fluoration pour former un nanodiamant fluoré par réaction de particules de nanodiamant avec un agent de fluoration ;
une étape d'oxydation pour soumettre à un traitement d'oxydation le nanodiamant fluoré formé dans l'étape de fluoration de telle sorte que le rapport des éléments oxygène-au-fluor du nanodiamant fluoré soit ajusté à 0,06 à 0,20 ;
une étape de mise en suspension pour la formation d'une suspension en mélangeant le nanodiamant fluoré obtenu dans l'étape d'oxydation avec un milieu de dispersion contenant un alcool ; et
une étape de calibrage pour calibrer la suspension formée dans l'étape de mise en suspension.

3. Procédé suivant la revendication 2, dans lequel l'alcool est utilisé seulement comme milieu de dispersion.

4. Procédé suivant la revendication 2 ou 3, dans lequel l'alcool est un alcool inférieur et/ou un alcool fluoré ayant 5 ou moins de 5 atomes de carbone qui existe à l'état liquide aux températures ambiantes et qui a une viscosité égale ou inférieure à 4 cP à 20°C.

5. Procédé suivant l'une quelconque des revendications 2 à 4, dans lequel le traitement d'oxydation est un traitement thermique dans une atmosphère contenant de l'oxygène, un traitement hydrothermique ou un traitement ultrasonique dans un agent oxydant.
